# EUROPEAN PATENT APPLICATION

(11) **EP 1 359 062 A1**
(43) Date of publication of application: **05.11.2003**
(21) Application number: 03075919.5
(22) Date of filing: 31.03.2003
(51) Int. Cl.: B60R 21/16, B60R 21/20

(54) **Air bag module assembly**

(30) Priority: 18.04.2002 US 125183
(71) Applicant: Delphi Technologies, Inc., Troy, MI 48007 (US)
(72) Inventor: Hawthorn, Laura A., Tipp City, OH 45371 (US); Pinsenschaum, Ryan T., Vandalia, OH 45377 (US); Dunkle, Stephanie L., Springboro, OH 45066 (US); Kneisly, Ann L., Dayton, OH 45459 (US)
(74) Representative: Denton, Michael John

(57) **Abstract**

An air bag module (130, 230) for an automotive vehicle. The module (130, 230) includes a housing (132, 232) having a bottom wall (131, 231) and side walls (133, 135, 233, 235) extending upwardly from the bottom wall to define a depressed profile storage bin between the side walls. A gas emitting inflator(136, 236) is stored at a location within the housing (132, 232) between the side walls. An inflatable air bag cushion (134, 234) in fluid communication with the inflator (136, 236) is stored in folded relation at least partially within the housing (132, 232) such that a first portion (170, 270) of the air bag cushion (134, 234) is positioned at least partially across the housing (132, 232) between the side walls in elevated relation to the inflator (136, 236) and a second portion of the air bag cushion (172, 272) is stored in folded relation within the depressed profile storage bin in substantially side by side adjacent relation to the inflator (136, 236). A method for assembly of the air bag module is also provided.

## Description

### TECHNICAL FIELD

The present invention relates to an air bag module assembly and more particularly to an air bag module including a housing structure with an inflator and inflatable air bag cushion stored within the housing. A first portion of the air bag cushion is stored in folded relation across an upper portion of the housing and a second portion of the air bag is stored in folded relation in a substantially side-by-side arrangement with the inflator such that the first portion is initially inflated and deployed away from the housing and the second portion is thereafter fed progressively out of the housing during deployment.

### BACKGROUND OF THE INVENTION

It is well known in the prior art to provide an air bag module which includes an inflatable air bag cushion for protection of a vehicle occupant in the event of a collision. The air bag module typically includes an inflator for discharging an inflation medium to inflate the air bag cushion upon the occurrence of a predetermined level of vehicle deceleration or other measurable condition.

The inflator and air bag cushion are typically stored within a housing structure with the air bag cushion packed in folded relation substantially overlying the inflator. In such an arrangement inflation gas is directed into the overall cushion upon activation of the inflator thereby building pressure and forcing the air bag cushion through an overlying cover. The air bag cushion thereafter undergoes a substantially uniform expansion outside of the housing until inflation is complete. While such expansion provides substantial protective benefits to an occupant, it is believed that during the earliest stages of inflation when pressure is initially being built in the freed air bag cushion, the air bag cushion may expand preferentially upwardly in immediately opposing relation to the inflator and generally towards the head portion of an occupant to be protected until full inflation is achieved. In some instances and in some automotive designs it is believed that it may be desirable to initially deploy a substantially fully inflated tensioned segment of the air bag cushion away from the storage location in covering relation to a portion of the dash panel and to thereafter progressively develop a fully inflated structure.

In the past, the deployment characteristics of the air bag cushion have been controlled largely by selection of an appropriate shape for the air bag cushion in combination with the use of appropriate shape restraining tethering elements. While such practices are useful in providing some degree of control over the deployment characteristics of an air bag, such practices by themselves may face limitations.

### SUMMARY OF THE INVENTION

The present invention provides advantages and alternatives over the prior art focus on air bag cushion geometry and tethering characteristics by utilizing a highly efficient packaging technique for the air bag cushion within the housing such that the air bag cushion is progressively expanded and fed out of the housing in a manner so as to project a fully inflated portion of the cushion away from the storage location during the early stages of inflation. Full expansion of the air bag cushion takes place as inflation is completed. This packaging arrangement may be used either alone or in conjunction with selection of air bag cushion geometries and tethering practices so as to provide an additional degree of control over cushion deployment characteristics.

According to one aspect of the invention, the advantageous deployment characteristics may be realized by utilizing a housing configuration which supports an inflator in fluid communication with an inflatable air bag cushion which is folded with a substantial portion of the air bag cushion in side-by-side relation to the inflator. Another portion of the inflatable cushion may be folded in a traditional overlying relation to the inflator. Upon inflation, the portion of the air bag cushion folded in overlying relation to the inflator undergoes initial preferential inflation and deployment away from the housing during the initial stages of activation. The portion of the air bag cushion which undergoes such initial inflation thereafter pulls the remainder of the inflatable cushion out of the housing in a progressive manner as expansion is completed. The dynamic equilibrium established between the segment of the air bag cushion which is released from the housing and that which is retained within the housing during the inflation process results in a generally low profile deployment character wherein the initially inflated portion of the air bag cushion is fed out of the housing in a tensioned state and defines a dynamic reaction surface for projection of the air bag cushion towards the chest portion of the occupant to be protected at an early stage of deployment. Such deployment characteristics may be desirable in some instances. The improved module arrangement thus uses the relative orientation and packing arrangement of the inflator and the cushion to control deployment characteristics. Such an arrangement may provide an enhanced degree of versatility in the design of an appropriate air bag system for a given vehicle application.

### BRIEF DESCRIPTION OF THE DRAWINGS

The principles of the present invention are set forth in the following detailed description through reference to the accompanying drawings which are incorporated in and which constitute a part of this specification and in which:
FIG. 1 is a cut-away view of a passenger side of a vehicle interior including an air bag module according to the prior art;
FIG. 2 is a cut-away side view of an exemplary prior art air bag module;
FIG. 3 is a view similar to FIG. 1 illustrating the initial and final deployment characteristics of an air bag cushion deployed from a prior art air bag module;
FIG. 4 is a cut-away end view of a first embodiment of an air bag module assembly according to the present invention;
FIG. 5 is a view similar to FIG. 3 illustrating the initial and final deployment characteristics of an air bag cushion from a module assembly according to the present invention; and
FIG. 6 is a cut-away end view of a second exemplary embodiment of an air bag module assembly according to the present invention.

While the invention has been illustrated and generally described above, and will hereafter be described in detail in connection with certain potentially preferred embodiments, it is to be appreciated that the foregoing general description as well as the particularly illustrated and described embodiments as may be set forth herein are intended to be exemplary and explanatory only. Accordingly, there is no intention to limit the invention to such particularly illustrated and described embodiments. On the contrary, it is intended that the present invention shall extend to all alternatives, modifications, and equivalents as may embody the broad principles of the invention within the full spirit and scope thereof.

### DESCRIPTION OF THE PREFERRED EMBODIMENT

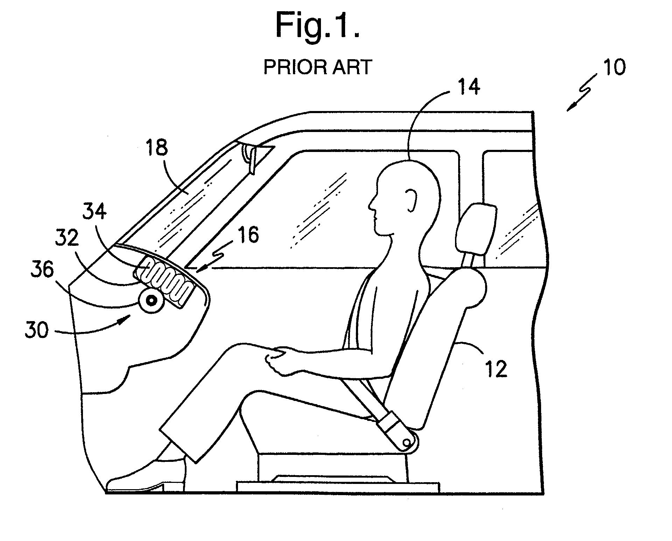

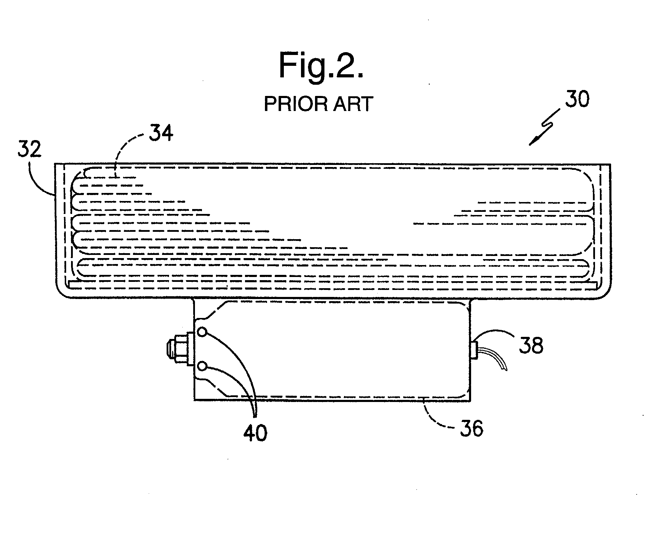

Reference will now be made to the drawings wherein to the extent possible like reference numerals are utilized to designate corresponding components throughout the various views. In FIG. 1 it is seen that a vehicle 10 may include a seating structure 12 to support an occupant 14 such as a vehicle passenger in generally opposing relation to a dash panel 16 located generally below a windshield 18. An air bag module designated generally as 30 is stored in hidden relation beneath the surface of the dash panel 16. As best seen in FIG. 2, in the illustrated exemplary prior art configuration the module 30 includes a housing 32 for storing a folded air bag cushion 34 of fabric or other suitable pliable material in overlying relation to a gas emitting inflator 36.

Upon the occurrence of predefined vehicle conditions such as rapid deceleration, the inflator 36 is activated by an initiator 38 such as a pyrotechnics squib or other device as will be well known to those of to those of skill in the art. The gas emitting inflator 36 includes one or more gas emitting openings 40 for transmission of inflation gas into the air bag cushion 34. The inflator 36 and air bag cushion 34 are typically oriented such that fluid communication is established between the inflator 36 and the air bag cushion 34 so as to cause the inflation of the air bag cushion 34 upon discharge of inflation gas from the gas emitting openings 40.

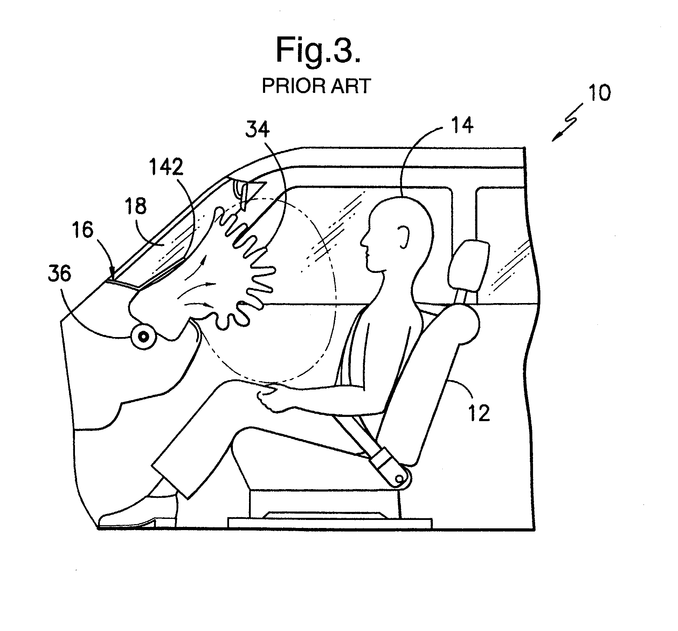

As illustrated in FIG. 3, upon activation of the inflator 36 the overlying air bag cushion 34 typically undergoes an initial pressurization causing it to break out from its initial confined storage position beneath the dash panel 16. This egress normally takes place at a predefined break-out location 42 formed by the introduction of a preferentially weakened pattern across the dash panel 16. Because the air bag cushion 34 is folded in overlying relation to the inflator 36, it is pushed out through the dash panel 16 as a substantially unitary partially inflated mass.

As will be appreciated, at the earliest stages of deployment following egress from beneath the dash panel 16 the air bag cushion 34 is in the form of a generally loose substantially unrestrained inflatable chamber (shown in solid lines) which reacts against the windshield 18 and thereafter expands outwardly simultaneously in all directions thereby resulting in the immediate projection away from the dash panel 16 until ultimately assuming a final expanded configuration (shown in phantom lines). This rapid multi-directional expansion may result in the early stage projection of the air bag cushion 34 generally upwardly. Upon further tensioned expansion, the air bag cushion 34 rotates into a lowered position.

It is contemplated that in some instances it may be desirable to achieve a substantially staged deployment of the air bag cushion wherein the inflation gas from the inflator is utilized to first inflate a portion of the air bag cushion which projects away from the housing and wherein the introduction of further inflation gas results in the sequential egress of the remainder of the inflatable cushion until full inflation occurs. Thus, unlike the prior art configurations, the air bag cushion undergoes a more controlled and progressive egress and expansion.

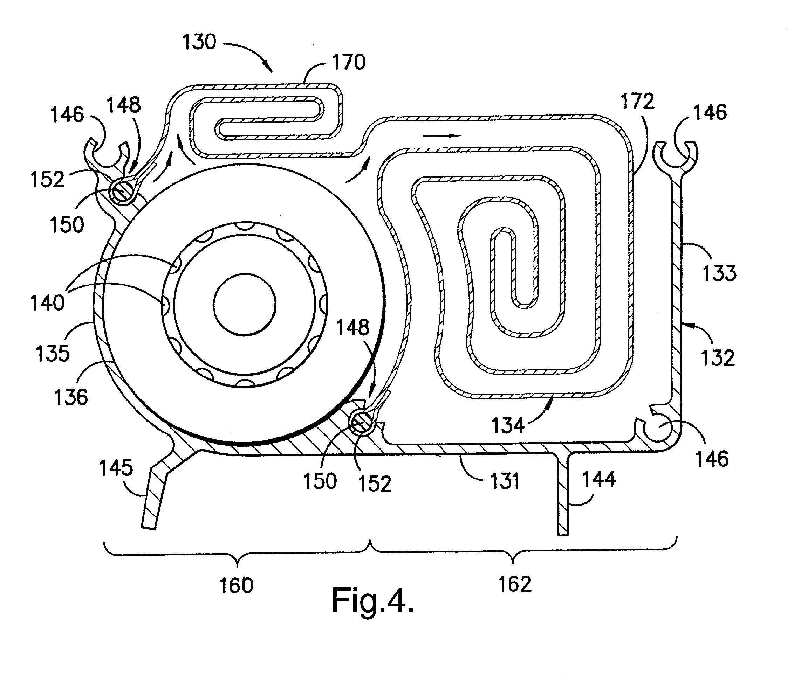

A first embodiment of an air bag module assembly according to the present invention is illustrated in FIG. 4 wherein components corresponding to those previously illustrated and described are designated by like reference numerals increased by 100. In the exemplary embodiment illustrated in FIG. 4, the air bag module assembly 130 incorporates a housing 132 in which is an inflatable air bag cushion 134 is stored in fluid communication with an inflator 136. The housing 132 includes a bottom wall 131 and side walls 133, 135 extending upwardly away from the bottom wall 133 so as to define a substantially bin-like storage compartment between the side walls 133, 135.

In the illustrated embodiment, the inflator 136 is of a generally cylindrical configuration similar to that illustrated in FIG. 2 although it is contemplated that any other configuration as may be known to those of skill in the art may likewise be utilized. As illustrated, the side wall 135 adjacent to the inflator 136 may be curved to conform to the profile of the inflator thereby enhancing support and facilitating proper orientation of the inflator during assembly. In the illustrated exemplary embodiment, the housing 132 includes attachment legs 144, 145 which may be secured in fixed relation to a cross-vehicle support frame (not shown) so as to hold the housing 132 and attached components in stable relation within the vehicle below the dash panel.

The housing 132 is preferably a substantially unitary piece of material such as molded plastic or extruded metal. Light gauge steel or aluminum may be particularly preferred. The housing 132 may be enclosed at its ends by mating end plates (not shown) affixed in place at screw-acceptance openings 146 disposed at predefined locations around the ends of the side walls. As illustrated, the housing 132 also preferably includes a pair of rod-accepting channels 148 extending in the cross-vehicle direction. As will be appreciated, these rod-accepting channels are utilized to secure the air bag cushion 134 in place in at least partial surrounding relation to the inflator 136 by use of containment rods 150 which are insertable through loop structures 152 which boarder a mouth opening within the air bag cushion 134 such that the loop structures 152 are held securely within the rod-accepting channels once the containment rods 150 are inserted therein. Of course it is to be understood that any alternative arrangement for holding the air bag cushion 134 in place may likewise be utilized.

The housing 132 is preferably made up of a first section 160 holding the inflator 136 and a second section 162 forming a relatively deep depressed storage area in which a substantial portion of the air bag cushion 134 is folded in adjacent relation to the inflator 136. The housing 132 is preferably oriented within the vehicle such that the first section 160 holding the inflator 136 is disposed at a forward location within the vehicle relative to the second section 162. That is, the second section 162 is disposed between the inflator 136 and the occupant to be protected. Of course, other orientations including the reversal of that illustrated may likewise be utilized if desired.

Regardless of the actual orientation which is utilized, it is contemplated that the air bag cushion 134 will be folded in stored relation within the housing 132 such that a first portion 170 of the air bag cushion 134 is folded at least partially across the housing 132 in elevated relation to the inflator 136. The first portion 170 of the air bag cushion 134 is preferably in substantially direct fluid communication with the gas emitting openings 140 in the inflator 136 such that upon activation of the inflator 136 the first portion 170 of the air bag cushion 134 undergoes a substantially immediate and complete inflation. As illustrated, the air bag cushion 134 also preferably includes a second portion 172 folded upon itself in serpentine orientation to the side of the inflator136 to establish a substantially side-by-side relationship within the housing 132. It is to be understood that by the term "side-by-side relationship" is meant an adjacent relationship within the housing 132 regardless of the orientation of the housing 132 within the vehicle. Thus, such a side-by side relationship may exist even if the housing is in a vertical or semi-vertical orientation within the vehicle and is not contingent upon the illustrated horizontal orientation. Likewise, the indication that the first portion 170 of the air bag cushion 134 is in "elevated relation" to the inflator is to be understood to relate to the relative position of the first portion 170 and the inflator 136 within the housing 132 such that any disposition of the first portion 170 at a location between the inflator 136 and the housing opening constitutes such an elevated relation. Thus, such an elevated relation may exist even if the housing is in a vertical or semi-vertical orientation within the vehicle and is not contingent upon the illustrated horizontal orientation.

It is believed that the folding arrangement of the various portions of the air bag cushion 134 may provide a degree of control over the inflation character of the air bag cushion 124. In particular, the substantially direct fluid communication between the inflator 136 and the first portion 170 of the air bag cushion 134 in combination with the folded side-by-side relation of the second portion 172 of the air bag cushion 134 relative to the inflator 136 is believed to cause the second portion 172 to undergo inflation and corresponding egress from the housing 132 only after the first portion 170 is inflated.

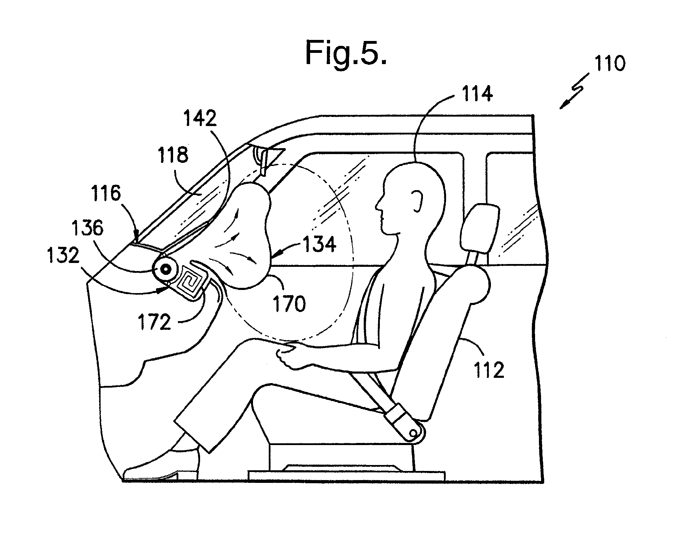

The early stage deployment character resulting from the arrangement illustrated in FIG. 4 is shown in FIG. 5. As illustrated, the packaging of the first portion 170 of the air bag cushion 134 in direct fluid communication above the inflator 136 causes the first portion 170 to undergo substantially complete inflation thereby resulting in an almost immediate establishment of a fully inflated barrier (shown in solid lines) projecting away from the housing 132 while the second portion 172 is still folded within the housing 132. In the initial inflated state the first portion 170 is believed to establish an inflated dynamic reaction surface for interaction with the second portion 172 as the second portion 172 of the air bag cushion 134 is progressively pulled out of the second section 162 of the housing 132 until full deployment of the air bag cushion 134 is achieved as shown in phantom lines. Thus, the reaction surface for effecting downward rotation of the second portion 172 is moved away from the windshield 118 and closer to the occupant 114 thereby avoiding reliance upon reaction with the windshield 118.

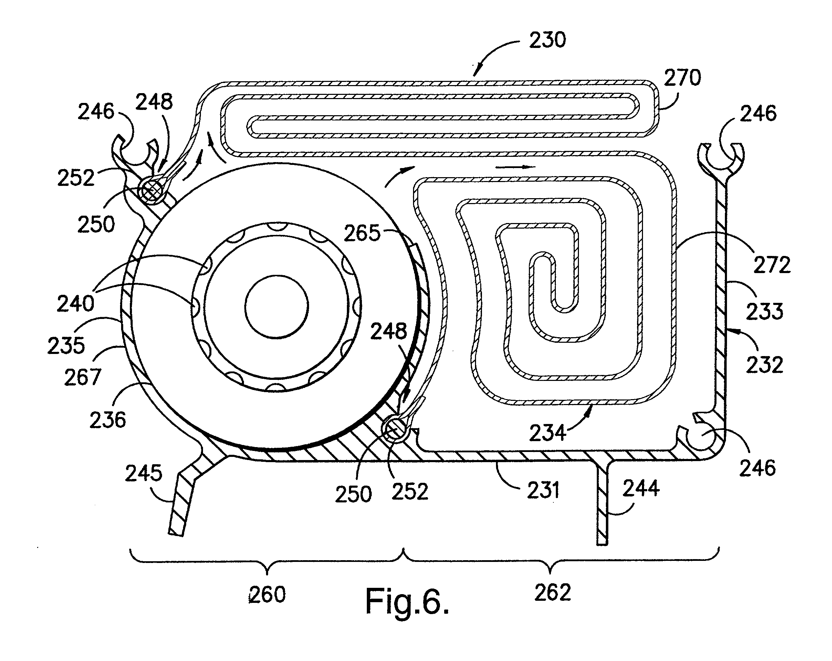

It is to be understood that the principles of the present invention may be reflected in any number of other alternative embodiments. By way of example only, and not limitation, an alternative embodiment is illustrated in FIG. 6 wherein elements corresponding to those previously illustrated and are designated by corresponding reference numerals increased by 200. In the air bag module Assembly 230 illustrated in FIG. 6 the housing 232 includes an internal carriage arm 265 which extends upwardly in cradling relation around the inboard surface of the inflator 236. The cradling arm 265 is preferably configured such that the inflator 236 may slide into position between the cradling arm 265 and an opposing curved side wall 267 during assembly but will thereafter be held fixedly in place upon attachment of mating end plate structures (not shown). In addition to the presence of the cradling arm 265, the arrangement illustrated in FIG. 6 further differs from that shown in FIG. 4 with regard to the folded orientation of the air bag cushion 234 relative to the inflator 236.

As illustrated, in the embodiment illustrated in FIG. 6 the air bag cushion 234 is folded such that a first portion 270 is folded in elevated relation to the inflator 236 across substantially the entire width of the housing 232. As will be appreciated, such an arrangement provides additional material for use in the establishment of the early stage inflated portion. As with the folding arrangement illustrated in FIG. 4, the first portion 270 of the air bag cushion 234 is preferably in substantially direct fluid communication with the inflator 236 such that substantially immediate and complete inflation takes place. A second portion 272 of the air bag cushion 234 is folded upon itself in a substantially serpentine arrangement so as to promote the same progressive tensioned deployment characteristics described in relation to the arrangement illustrated in FIG. 4. Accordingly, while the folding arrangement illustrated in FIG. 6 provides for a greater percentage of the air bag cushion 234 to undergo initial inflation, in all other respects the deployment character is substantially the same as that illustrated and described in relation to FIG. 4. By way of example only, and not limitation, it is contemplated that the folding arrangement as illustrated in FIG. 6 may be useful in automotive interior designs which incorporate dash panel configurations of substantial depth so as to provide desired coverage characteristics.

As will be appreciated, while FIGS. 4 and 6 may represent two potential folding arrangement, it is likewise contemplated that either greater or lesser percentages of the air bag cushion may be incorporated within the first portion which undergoes initial immediate inflation thereby affording the designer the ability to substantially adjust the early stage deployment character so as to provide desired coverage for a given automotive interior configuration.

It is to be understood that while the present invention has been illustrated and described in relation to several potentially preferred embodiments, constructions, and procedures, such embodiments, constructions, and procedures are illustrative only and that the present invention is in no event to be limited thereto. Rather, it is contemplated that modifications and variations embodying the principles of the present invention will no doubt occur to those of skill in the art. It is therefore contemplated and intended that the invention shall extend to all such modifications and variations as may incorporate the broad principles of this invention within the full spirit and scope of the claims appended hereto.

## Claims

1. An air bag module assembly (130, 230) for disposition within an automotive vehicle (10) in substantially opposing relation to an occupant (14) to be protected, the air bag module assembly (130, 230) comprising:
a housing (132, 232) including a bottom wall (131, 231) and side walls (133, 135, 233, 235) extending upwardly from the bottom wall (131, 231) to define a depressed profile storage bin between the side walls (133, 135, 233, 235);
a gas emitting inflator (136, 236) disposed at a location within the housing (132, 232) between the side walls (133, 135, 233, 235); and
an inflatable air bag cushion (134, 234) in fluid communication with the inflator (136, 236), wherein the air bag cushion (134, 234) is stored in folded relation at least partially within the housing (132, 232) such that a first portion (170, 270) of the air bag cushion (134, 234) is disposed at least partially across the housing (132, 232) between the side walls in elevated relation to the inflator (136, 236) and wherein a second portion (172, 272) of the air bag cushion (134, 234) is disposed in folded relation within the depressed profile storage bin in substantially side by side adjacent relation to the inflator (136, 236) such that upon activation of the inflator (136, 236) the first portion (170, 270) of the air bag cushion (134, 234) is initially pressurized and projected away from the inflator (136, 236) and such that the second portion (172, 272) of the air bag cushion is thereafter progressively pulled out of the depressed profile storage bin as inflation proceeds.

2. The assembly as recited in claim 1, wherein the inflator (136, 236) is disposed within the housing (132, 232) along one of the side walls (135, 235) at a forward position within the vehicle (10) relative to the second portion (172, 272) of the air bag cushion (134, 234).

3. The assembly as recited in claim 2, wherein the inflator (136, 236) comprises an elongate cylindrical structure and wherein said one of the side walls (135, 235) has a curved surface for cradling the inflator (136, 236).

4. The assembly as recited in claim 3, wherein a supplemental cradling arm structure (265) extends upwardly from the bottom wall (231) of the housing (232) and wherein the cradling arm structure (265) is disposed at least partially around the inflator (236) such that the inflator (236) is held in cradled relation between the curved surface and the cradling arm structure (265).

5. The assembly as recited in claim 1, wherein the first portion (270) of the air bag cushion (234) is disposed substantially across the housing (232) between the side walls (233, 235) so as to substantially cover both the inflator (236) and the second portion of the air bag cushion (272).

6. The assembly as recited in claim 1, wherein the second portion (172, 272) of the air bag cushion (134, 234) is folded upon itself in a substantially serpentine configuration.

7. An air bag module assembly (130, 230) for disposition within an automotive vehicle (10) in substantially opposing relation to an occupant (14) to be protected, the air bag module assembly (130, 230) comprising:
a housing (132, 232) including a bottom wall (131, 231) and side walls (133, 135, 233, 235) extending upwardly from the bottom wall (131, 231) to define a depressed profile storage bin between the side walls (133, 135, 233, 235);
a gas emitting inflator (136, 236) disposed at a location within the housing (132, 232) between the side walls (133, 135, 233, 235); and
an inflatable air bag cushion (134, 234) in fluid communication with the inflator (136, 236), wherein the air bag cushion (134, 234) is stored in folded relation at least partially within the housing (132, 232) such that a first portion (170, 270) of the air bag cushion (134, 234) is disposed in a multi-layer folded arrangement projecting away from the inflator (136, 236) at least partially across the housing (132, 232) between the side walls (133, 135, 233, 235) in elevated relation to the inflator (136, 236) and wherein a second portion (172, 272) of the air bag cushion (134, 234) is disposed in folded relation within the depressed profile storage bin in substantially side by side adjacent relation to the inflator (136, 236) such that upon activation of the inflator (136, 236) the first portion (170, 270) of the air bag cushion (134, 234) is initially pressurized and projected away from the inflator (136, 236) and such that the second portion (172, 272) of the air bag cushion (134, 234) is thereafter progressively pulled out of the depressed profile storage bin as inflation proceeds.

8. The assembly as recited in claim 7, wherein the inflator (136, 236) is disposed within the housing along one of the side walls (135, 235) at a forward position within the vehicle (10) relative to the second portion (172, 272) of the air bag cushion (134, 234).

9. The assembly as recited in claim 8, wherein the inflator (136, 236) comprises an elongate cylindrical structure and wherein said one of the side walls (135, 235) has a curved surface for cradling the inflator (136, 236).

10. The assembly as recited in claim 9, wherein a supplemental cradling arm structure (265) extends upwardly from the bottom wall (231) of the housing (232) and wherein the cradling arm structure (265) is disposed at least partially around the inflator (236) such that the inflator (236) is held in cradled relation between the curved surface and the cradling arm structure (265).

11. The assembly as recited in claim 7, wherein the first portion (270) of the air bag cushion (234) is disposed substantially across the housing (232) between the side walls (233, 235) so as to substantially cover both the inflator (236) and the second portion (272) of the air bag cushion (234).

12. A method of assembling an air bag module (130, 230) for disposition within an automotive vehicle (10) in substantially opposing relation to an occupant (14) to be protected, the method comprising:
providing a housing (132, 232) including a bottom wall (131, 231) and side walls (133, 135, 233, 235) extending upwardly from the bottom wall (131, 231) to define a depressed profile storage bin between the side walls (133, 135, 233, 235);
placing a gas emitting inflator (136, 236) at a location within the housing (132, 232) between the side walls (133, 135, 233, 235);
securing an inflatable air bag cushion (134, 234) in place at fastening locations such that the air bag cushion is in fluid communication with the inflator (136, 236);
folding a first portion (170, 270) of the air bag cushion (134, 234) such that the first portion (170, 270) is disposed at least partially across the housing (132, 232) between the side walls in elevated relation to the inflator (136, 236); and
packing a second portion (172, 272) of the air bag cushion (134, 234) in folded relation within the depressed profile storage bin in substantially side by side adjacent relation to the inflator (136, 236) such that upon activation of the inflator (136, 236) the first portion (170, 270) of the air bag cushion (134, 234) is initially pressurized and projected away from the inflator (136, 236) and such that the second portion (172, 272) of the air bag cushion (134, 234) is thereafter progressively pulled out of the depressed profile storage bin as inflation proceeds.

13. The method as recited in claim 12, wherein the inflator (136, 236) is disposed within the housing (132, 232) along one of the side walls (135, 235) at a forward position within the vehicle relative to the second portion (172, 272) of the air bag cushion (134, 234).

14. The method as recited in claim 13, wherein the inflator (136, 236) comprises an elongate cylindrical structure and wherein said one of the side walls (135, 235) has a curved surface for cradling the inflator (136, 236).

15. The method as recited in claim 14, wherein the housing (232) further includes a supplemental cradling arm structure (265) extends upwardly from the bottom wall (231) of the housing (232) and wherein the cradling arm structure (265) is disposed at least partially around the inflator (236) such that the inflator (236) is held in cradled relation between the curved surface and the cradling arm structure (265).

16. The method as recited in claim 12, wherein the first portion (270) of the air bag cushion (234) is disposed substantially across the housing (232) between the side walls (233, 235) so as to substantially cover both the inflator (236) and the second portion (272) of the air bag cushion (234).

17. The method as recited in claim 12, wherein in the packing step the second portion (172, 272) of the air bag cushion (134, 234) is folded upon itself in a substantially serpentine configuration
